# EUROPEAN PATENT SPECIFICATION

(11) **EP 1 522 159 B1**
(45) Date of publication and mention of the grant of the patent: **26.05.2010**
(21) Application number: 03764351.7
(22) Date of filing: 03.07.2003
(51) Int. Cl.: G06F 9/445, H04L 29/06, H04L 12/24

(54) **APPLICATION LEVEL GATEWAY AND FIREWALL RULE SET DOWNLOAD VALIDATION**
ÜBERPRÜFUNG DES HERUNTERLADENS VON EINEM REGELSATZ FÜR EINE ÜBERGANGSEINRICHTUNG SOWIE FEUERSCHUTZWAND AUF ANWENDUNGSEBENE
PASSERELLE AU NIVEAU D'APPLICATION ET VALIDATION DE TELECHARGEMENT D'UN ENSEMBLE DE REGLES PARE-FEU

(30) Priority: 11.07.2002 US 395042 P
(43) Date of publication of application: 13.04.2005
(73) Proprietor: Thomson Licensing, 92443 Issy-les-Moulineaux Cedex (FR)
(72) Inventor: GERVAIS, John, Alan, Carmel, IN 46032 (US); MAYERNICK, Mark, Ryan, Boulder, CO 80304 (US); BEARD, Rex, Irvin, Carmel, IN 46032 (US)
(74) Representative: Lorette, Anne
(86) International application number: PCT/US2003/021058
(87) International publication number: WO 2004/008271

(56) References cited:
- WO-A-01/80023
- US-A- 5 599 231
- US-A- 5 845 128
- US-A- 5 845 128
- US-A- 5 991 774
- US-A- 6 009 547
- US-A- 6 029 196
- US-A- 6 031 830
- US-A- 6 105 149

## Description

### CROSS-REFERENCE TO RELATED APPLICATIONS

This patent application claims the benefit of US. Provisional Application serial number 60/395,042, filed July 11, 2002.

### FIELD OF INVENTION

The present invention relates to the field of bi-directional communication devices. More specifically, the present invention relates to upgrading application level gateways and firewall rule sets for bi-directional communication devices.

### DESCRIPTION OF THE BACKGROUND ART

Field upgradeable products are becoming more prevalent in the broadband market today. Devices, such as cable modems and other bi-directional communication devices, may have application level gateways (ALGs) and/or firewall rule sets downloaded remotely to them while in a customer's home or office. Downloading files containing such ALGs and/or firewall rule sets places the device at higher risk for downloading improper file versions, corrupted files, non-authorized files, files that are too large, incompatibility with the device's hardware and/or software, among others.

Downloading an incompatible or corrupted ALG file to a cable modem may cause the cable modem to hang up or crash. Once a cable modem hangs up or crashes, the cable modem becomes inoperable and, typically, requires a service call, illustratively from a multiple systems operator (MSO) service representative or the like, to repair the cable modem.

Therefore, there is a need to validate proper application level gateway files or firewall rule set files being downloaded to a bi-directional communication device such as a cable modem.

"WO 01/80023 describes a system for upgrading deployed devices that is intended to remove the customer-end burden of manually upgrading the devices. The device contains an agent that requests an upgrade from a server. The device is aware of its current upgrade version and will send a request to the server for upgrades that only apply to its current upgrade version. The server responds to the device and informs the device that an upgrade is available for the device. The device subsequently fetches the upgrade. Once an upgrade is complete, the version number changes to the newer version number ensuring that the device can request an upgrade that applies to its current upgrade version in the future."

### SUMMARY OF INVENTION

The disadvantages heretofore associated with the prior art, are overcome by the present invention of an apparatus and method as defined by claims 10 and 1.

### BRIEF DESCRIPTION OF THE DRAWINGS

The teachings of the present invention can be readily understood by considering the following detailed description in conjunction with the accompanying drawings, in which:
FIG. 1 depicts a high-level block diagram of a cable communications system over which an exemplary embodiment of the present invention is utilized;
FIG. 2 depicts a block diagram of an exemplary application level gateway (ALG) file, in accordance with the principles of the present invention; and
FIG. 3 depicts a flow diagram of a method for validating a upgraded ALG file in accordance with the principles of the present invention;

To facilitate understanding of the invention, identical reference numerals have been used, where possible, to designate identical elements that are common to the figures.

### DETAILED DESCRIPTION OF THE INVENTION

The present invention comprises a bi-directional communication device (BCD) operating in a bi-directional communications environment and method for downloading application level gateway (ALG) files or firewall rule sets to a BCD. For purposes of simplicity and better understanding of the invention, the present invention is illustratively discussed in terms of a cable communications distribution system. However, the principles of the present invention are also applicable to other bi-directional communication environments, such as satellite communication systems, ADSL, DSL, Dial-up, wireless systems, or any other bi-directional communication environment capable of providing bi-directional communications (e.g., data, multimedia content, and other information) to a plurality of subscriber devices.

The bi-directional communication device is, in one embodiment, a CableLabs Certified CableModem™ compliant cable modem that may be used to provide bi-directional communications between a cable television system operator (and Internet service providers (ISPs)) deploying DOCSIS-based products, such as cable modems, and a plurality of subscriber devices, such as personal computers, and the like. CableLabs Certified CableModem™ (previously known as DOCSIS (data over cable service interface specifications) is funded by leading CATV operators who establish specifications that specify modulation schemes and the protocols for exchanging bi-directional signals over cable. The various versions of DOCSIS are incorporated herein by reference in their entirety.

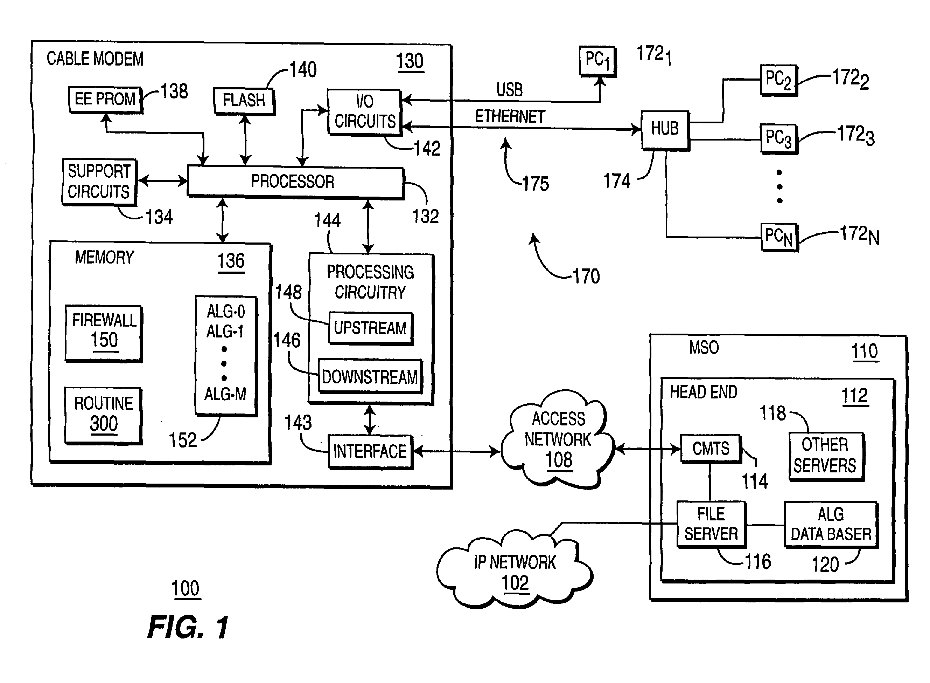

FIG. 1 depicts a block diagram of a cable modem communication system 100 in which an exemplary embodiment of the present invention may be utilized. The bi-directional communications system (e.g., cable modem system) 100 comprises a multiple systems operator (MSO, i.e., cable operator) 110 and a plurality of subscriber premise equipment 170, which are coupled to the service provider 110 via an access network 108.

The subscriber premise equipment 170 comprises a plurality of user devices 172₁ through 172_{N} (collectively user devices 172) respectively coupled to a plurality of bi-directional communication devices (e.g., cable modems) 130₁ through 130_{N} (collectively cable modems 130) of which only one cable modem 130 is shown in FIG. 1. The user devices 172 may be any type of device capable of processing a digitized stream comprising audio, video, and/or data, such as a personal computer (PC), laptop computer, television set, hand-held device, or any other device capable or transmitting and/or receiving data. Each user device 170 is coupled to the access network 108 via a cable modem 130, which connects the user device 172 to an IP network 102 (e.g., the Internet) via the local cable television provider (i.e., MSO 110).

It is noted that in FIG. 1, a plurality of user devices 172 is illustratively shown as being coupled to a single cable modem 130 via a hub 174. However, one skilled in the art will appreciate that each user device 172 may alternatively be coupled to a respective cable modem or grouped in any configuration to provide bi-directional communications between the user devices 172 and the MSO 110.

The cable modem 130 allows the subscriber to download information from the service provider 110 at speeds much faster than a telephone dial-up modem. For example, a cable modem 130 can provide connectivity at a rate of three or more megabits per second, as compared to 56 kilobits per second for a telephone modem. One type of cable modem illustratively used in the system 100 is a DCM305 model, manufactured by Thomson Inc., of Indianapolis, IN. It is noted that cable modems (and modem functionality) provided by other manufacturers that are DOCSIS compliant may also be implemented in the system 100 as well.

The service provider 110 may be any entity capable of providing low, medium and/or high-speed data transmission, multiple voice channels, video channels, and the like. In particular, data is transmitted via radio frequency (RF) carrier signals by the service provider 110 in formats such as the various broadcast formats (e.g., Digital Broadcast Satellite (DBS)), cable transmission systems (e.g., high definition television (HDTV)), digital video broadcasting ((DVB-C) (i.e., European digital cable standard)), and the like. The service provider 110 provides the data over the cable transport network 108.

The service provider 110 typically comprises a plurality of head-ends 112 (only one head end shown in FIG. 1), which are deployed in various geographic regions to provide connectivity, services, and support to subscribers located in such regions. For example, one or more head-ends 112 may be located in proximity to a large subscriber base, such as a city (e.g., San Francisco, CA). Other head-ends 110 may be provided by the MSO 110 to support other cities or regional areas as required.

Each head-end 112 comprises at least one termination system (e.g., cable modem termination system (CMTS)) 114, a file server 116, among other support servers 118, such as a dynamic host configuration protocol (DHCP) server, a trivial file transfer protocol (TFTP) server, an Internet time protocol (ITP) server, web caching servers, MSO or ISP content delivery servers, and the like.

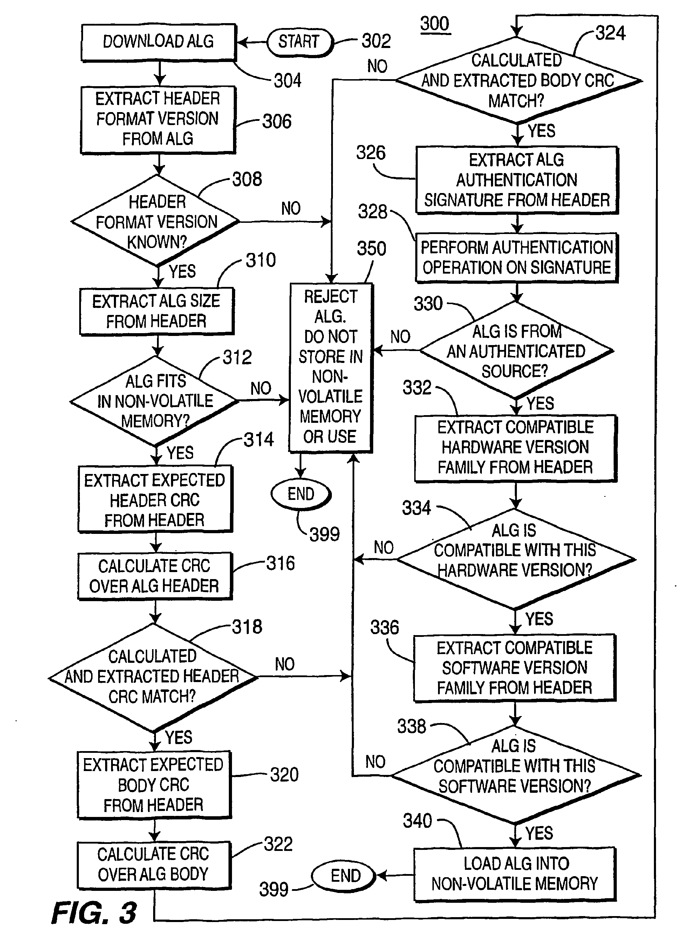

The file server 116 provides a means by which files such as the downloadable application level gateway (ALG) files or firewall rule sets may be transferred from the MSO 110 to the cable modem 130. Specifically, the file server 116 is coupled to an ALG database 120, which stores a plurality of ALG files pertaining to various protocols and devices, such as the cable modems 130. The file server 116 retrieves a particular ALG file from the ALG file database 120 and sends such file to the bi-directional device 130 as required and discussed below with regard to method 300 of FIG. 3.

The other support servers 118 are used to establish connectivity between the cable modems 130 and the IP network 102 during cable modem initialization. Specifically, the other support servers 118 deliver a configuration file and the current date and time to a cable modem 130 each time it initializes. Further, the other servers 118 such as web caching servers, MSO or ISP content delivery servers and the like provide regionalized worldwide web content, redundant connectivity, and the like. Moreover, the DHCP server centrally manages and automatically assigns IP addresses to the host devices (i.e., cable modems) coupled to the IP network 102. For example, when a cable modem 130 is added, replaced, or moved in the system 100, the DHCP server automatically assigns a new IP address for that cable modem 130.

The CMTS 114 exchanges digital signals with cable modems 130 on the cable network 100. The quantity of CMTSs 114 disposed at each head-end 112 is dependent on the number of subscribers being served in a particular geographic region. A single CMTS 114 typically provides connectivity for up to about 8000 cable modems 130. In instances where a geographic region has more than 8000 subscribers, the head-end 112 is provided with additional CMTSs 114, as required.

A data service (e.g., multimedia content) and ALG upgrade files are delivered to the cable modem 130 through an RF path (i.e., channels) over the Access Network 108 via a transmission medium (e.g., a conventional bi-directional hybrid fiber-coax (HFC) cable network, such as specified under the North American or European DOCSIS standards), coupled to the cable modem 130. It is noted that the cable modem 130 may be installed externally or internally to a subscriber's computer or television set 172, and is connected by a Local Area Networking medium supported by the cable modem 130 and computer or television set (e.g. Ethernet, Universal Serial Bus (USB), 802.11 b wireless, Home Phoneline Networking Alliance (HPNA)).

One channel is used for downstream signals from the CMTS 114 to the cable modem 130, while another channel is used for upstream signals from the cable modem 130 to the CMTS 114. When a CMTS 114 receives upstream signals from a cable modem 130, the CMTS 114 processes these signals into Internet Protocol (IP) packets, which are routed over the IP network 102 to a particular destination (e.g., a server having a desired content or a web site). When a CMTS 114 sends downstream signals to a cable modem 130, the CMTS 114 modulates the downstream signals for transmission across the access network 108 to the cable modem 130. The cable modem 130 converts the modulated signal to a baseband signal for processing by the user device 172.

The exemplary cable modem 130 is utilized to provide downstream broadband data signals from the service provider 110 to the user device 172 of a data communications system 100. Additionally, the exemplary cable modem 130 is utilized to transfer upstream baseband data signals from the illustrative user device 172 back to the service provider 110.

The cable modem 130 comprises a processor 132, support circuits 134, I/O circuits 142, storage devices such as an EEPROM 138 and FLASH memory 140, as well as volatile memory 136. The processor 132 may be a cable modem processor, such as a single chip BCM3345 device manufactured by Broadcom Inc., of Irvine, CA, which includes a modulator and demodulator (not shown).

The EEPROM and FLASH memories 138 and 140 are non-volatile memory devices used to permanently store application program files, data files, and other program code that may be executed, illustratively, by the processor 132. For example, a firewall, a plurality of application level gateway files, and a routine for validating the application level gateway files may all be permanently stored in the EEPROM 138 and/or FLASH 140 memories.

The volatile memory 136 may be random access memory (RAM), which is used during operation to store all or portions of the programs stored in the non-volatile memory 138 and 140 for quick retrieval and execution. As shown in FIG. 1, a firewall program 150, a plurality of application level gateway files 152 (e.g., files ALG-0 through ALG-m, and routine 300, which is used for validating upgrades for the application level gateway files 152 (as discussed below in further detail with regard to FIG. 3), is depicted being stored in the volatile memory 136. Other programs that may be stored in memory 136 typically include process stacks, heap, transient data such as ALGs and firewall rule sets under discrimination, executing applications copied from Flash, startup constant data, a kernel and application code, and other data (not shown).

The processor 132 cooperates with conventional support circuitry 134 such as power supplies, clock circuits, cache memory and the like as well as circuits that assist in executing the software routines stored in the memory 136.

As such, it is contemplated that some of the process steps discussed herein as software processes may be implemented within hardware, for example as circuitry that cooperates with the processor 132 to perform various steps. The cable modem 130 also comprises input/output (I/O) circuitry 142 that forms an interface with the various functional elements communicating with the user devices 172. The physical layers between the cable modem 130 and user devices 172 may illustratively include Ethernet, coaxial cables, FDDI, ISDN, ATM, ADSL, CAT 1-5 cabling, USB, HomePNA, wireless data links (e.g., 802.11 or Bluetooth standard wireless links), a power line carrier, among others.

Furthermore, the cable modem 130 comprises signal processing circuitry 144, which further comprises downstream processing circuitry 146 and upstream processing circuitry 148. The signal processing circuitry 144 is coupled to the processor 132 and an interface 143, which is coupled to the access network 108.

In operation, the CMTS 114 converts digital data to a modulated RF signal and provides such modulated signals downstream, via the HFC transport (access) network 108 to the cable modem 130, where the RF signals are received, tuned, and filtered to a predetermined intermediate frequency (IF) signal. The IF signal is then demodulated into one or more respective baseband signals, and otherwise processed into, illustratively, data packets. The data packets are further transmitted, illustratively, through cabling (e.g., Ethernet, universal serial bus (USB), coaxial cable, and the like) 175 to the user device 172.

Similarly, a user of the user device 172 may send data signals to the cable modem 130 via the cabling 175. The cable modem 130 receives data signals from the user device 172, and then modulates and upconverts the data signals onto a RF carrier for upstream transmission back to the service provider 110, via the cable transport network 108.

The downstream processing circuitry 146 typically includes various components, such as a tuner, filters, demodulator, a controller, and other downstream processing circuitry, such as a medium access controller (MAC), which is also used for upstream processing. Typically, the downstream signals are either 64QAM or 256QAM signals having a frequency range of approximately 91 MHz to 860MHz. The downstream processing circuitry 146 selectively tunes, demodulates, and otherwise "receives" at least one of a plurality of downstream data signals from the CMTS 114 in response to a selection signal provided by the controller. A highpass filter (HPF) passes all downstream data signals to the tuner, which downconverts the received downstream RF signals from the HPF to a predetermined IF frequency signal. The IF signals are demodulated by the demodulator circuitry to provide one or more respective digital baseband signals. The digital baseband signals are sent to the medium access controller (MAC), where the received signals (e.g., MPEG packets) are de-encapsulated and formed into a bitstream for subsequent transport to the user device 172, as managed by the controller.

Prior to transport to the user device 172, the packets are sent either to an internal TCP/IP stack or to the firewall program 150 for examination, as discussed in further detail below. Once the packets are deemed to comply with the firewall program rules, the MAC, controller, and other digital circuitry may further process the packetized data (e.g., attach or encapsulate in appropriate transport packets as required) and then distribute the processed, packetized data to the user device 172 (or other information appliance). In particular, the MAC sends the packetized bitstream to the controller, where the data is processed (e.g., formatted) for interface with the user device 172. The controller transfers the formatted packetized bit stream (via cabling) to the user device 172 for further processing (e.g., extraction and upconversion of the data).

The upstream processing circuitry 148 typically includes various components such as, the upstream physical layer elements, an upstream medium access controller, a modulator, a low-pass filter, and other upstream processing circuitry (amplifiers, voltage regulators, and the like). The cable modem 130 receives signals (e.g., data signals) from the user device 172 for subsequent transmission to the service provider 110. In particular, a user sends data, data requests, or some other user request to the service provider 110 via the cable modem 130. The cable modem 130 receives the user requests, where the MAC and upstream processing circuitry format, encapsulate, and upconvert the signals (e.g., 5MHz to 54MHz frequency range) for transport. The modulator modulates (e.g., QPSK or 16QAM) the upconverted signals along the upstream signal path to the CMTS 114.

The firewall program 150 is capable of examining and filtering data packets (e.g., IP data packets) sent from an originating source node (e.g., file server on a WAN) to a destination node (e.g., local computer on a LAN). In particular, the firewall program 150 comprises a set of related programs that protect the resources of a private network from users from other networks. The firewall program 150 examines some or all of the network packets to determine whether to forward the packets to its destination. That is, the firewall program 150 operates at the network level. Data is only allowed to pass through the communications device 130 containing the firewall program 150 if the packet configuration does not violate specified rules.

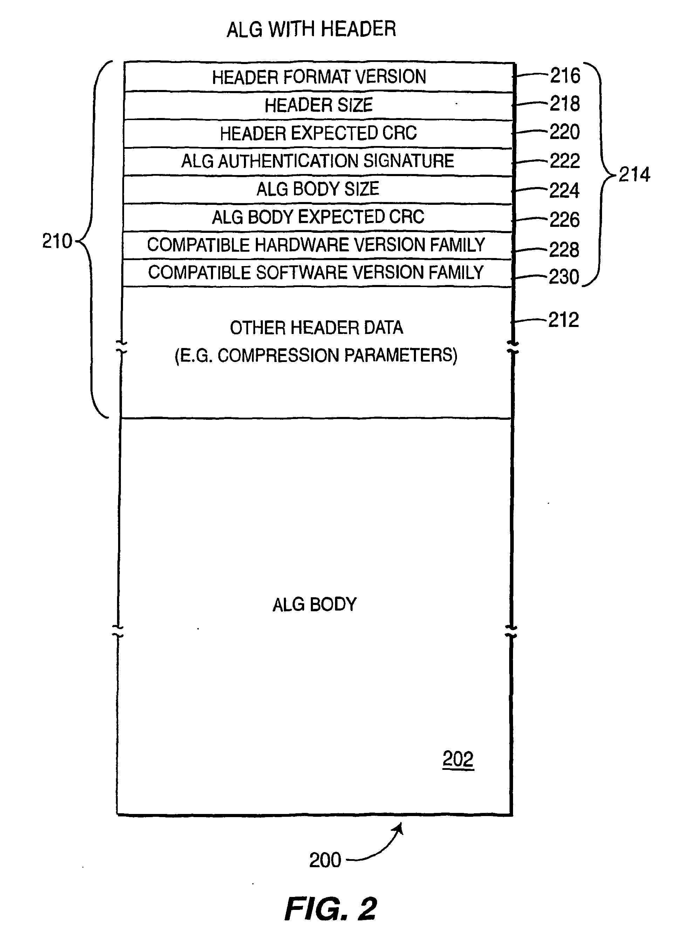

The firewall program rules are established, for example, by an administrator of a LAN (default rules may also be used), for example, at the service provider 110. The rules reflect policy considerations by an organization to provide security by prohibiting unwanted data from entering the organizations local area network/wide area network (LAN/WAN). For example, an organization may decide that particular Internet web sites should not be viewed by the organization's employees, or that some employees should be denied any Internet access. In one embodiment, the firewall rules are defined in application level gateway files such as the exemplary ALG file shown in FIG. 2. As such, the rules include programming to restrict some or all hypertext transfer protocols (HTTP). Additional rules include restricting data packets that may be deemed harmful to the LAN and end-users, such as worms, as well as unauthorized persons (i.e., "hackers") trying to infiltrate the LAN.

The ALG files are stored in a database 120 coupled to the TCP/IP file server 116, which are located at the service provider 110. When a system administrator updates the ALG files, the cable modems 130 will also require a file upgrade. In one embodiment, the ALG files may be provided to the cable modems 130 by a user requesting a download over the access network 108. In a second embodiment, the firewall 150 may periodically poll the ALG database to identify upgraded files at the service provider 110. Alternatively, the MSO 110 may command the cable modem 130 to obtain new firewall rule set or ALG data via a protocol such as Simple Network Management Protocol (SNMP). Once an upgraded ALG file is identified, the service provider 110 automatically retrieve the upgraded files and sends them to the cable modems 130. In a third embodiment, the upgraded ALG files may be stored on a non-volatile storage device, such as a CD-ROM, disk drive, floppy drive, and the like, in which the user may upload the new and/or upgraded ALG files to their cable modem 130 via their user device 172.

FIG. 2 depicts a block diagram of an exemplary application level gateway (ALG) file 200 of the present invention. The ALG file 200 comprises an ALG body 202 (payload) and a header 210. The ALG file 200 comprises executable code that the firewall program 150 executes in order to determine how to handle a particular protocol. That is, the ALG body 202 contains programming code that is protocol specific. For example, one ALG file 200 may comprise code to allow the passage of information utilizing an http protocol, while a second ALG file 200 contains executable programming code specific for blocking data utilizing FTP (file transfer protocol). Other ALG files 200 may be utilized to control traffic flow for other types of protocols, such as TFTP, SNMP, RLOGIN, and the like.

The ALG header 210 comprises header data fields such as header format version 216, header size 218, expected header CRC 220, payload authentication signature 222, payload size 224, expected payload CRC 226, compatible hardware and software version families 228 and 230, and other header data 212 such as compression parameters, copyright notices, and/or the date/time the payload was created, among other information. In one embodiment of the invention, many of these ALG header 210 components may be utilized as ALG file validity fields 214, which are used by the cable modem 130 to determine whether an upgraded or new ALG file 200 received by the cable modem 130 has been corrupted during file transfer, as well as compatible with the cable modem hardware and software. Although FIG. 2 is discussed in terms of an ALG file 200, the inventive ALG file should not be considered as limiting. For example, a similar header 210 may be appended to a file comprising firewall rules.

In particular, the validity fields 214 comprise a header format version field 216, a header size 218, a header expected CRC (cyclic redundancy check) 220, an ALG authentication signature 222, an ALG body size field 224, an ALG body expected CRC 226, a compatible hardware version family field 228, and a compatible software version family field 230. Each validity field 214 is checked by the cable modem 130 using method 300, as discussed below with regard to FIG. 3.

The header format version field 216 provides information regarding the order and length of the fields of the data in the header 210. Specifically, the header format version field 216 comprises a predefined number that corresponds to a known format. This predefined number will typically start at one (1) and increment each time a field is added, a length is changed or fields are rearranged in the header. The header format version field 216 prevents a misinterpretation by software that is unfamiliar with a new format. In one embodiment, the header format version field 216 may be 1 byte to 4 bytes in length, and in one specific embodiment is 2 bytes in length. The header size field 218 identifies the size of the header 214. In one embodiment, the header size field 218 may be 1 byte to 4 bytes in length, and in one specific subset of that embodiment is 2 bytes in length. The header expected CRC field 220 identifies a 16 or 32 bit polynomial that is appended to the header 210 and used for detecting errors (loss data) in the header 210.

The ALG authentication signature field 222 provides information regarding cryptographic authentication that a source (e.g., company, 3rd party entity, and the like) that generated a trusted firewall rule set or ALG. In one embodiment, the ALG authentication signature field 222 may be 1 byte to 1024 bytes in length, and in one specific subset of that embodiment is 128 bytes in length. The ALG body size field 224 identifies the size of the ALG body 202. In one embodiment, the ALG body size field 224 may be 1 byte to 4 bytes in length, and in one specific subset of that embodiment is 4 bytes in length. It is noted that the ALG body size field 224 refers to the length of the size field in the header. The actual ALG or rule set data files are typical in the order of a few thousand bytes. The ALG body expected CRC field 220 identifies a 16 or 32 bit polynomial that is appended to the header 210 and used for detecting errors (loss data) in the ALG body 202.

The compatible hardware version field 228 provides information regarding the set of hardware version(s) on which this file will execute (ALG) or operate (rule set) with no expected problems. In one embodiment, the compatible hardware version field 228 may be 1 byte to 8 bytes in length, and in one specific subset of that embodiment is 4 bytes in length. The compatible software version field 230 provides information regarding the set of application software version(s) on which this file will execute (ALG) or operate (rule set) with no expected problems. In one embodiment, the compatible software version field 230 may be 1 byte to 8 bytes in length, and in one specific subset of that embodiment is 4 bytes in length. It is noted that the illustrative sizes of each of the above mentioned fields should not be considered as limiting, and the fields may be any length suitable to provide the required information in an efficient manner (e.g., bandwidth considerations). It is further noted that the same type of header may be added to a firewall rule set to apply the same discrimination algorithm.

FIG. 3 depicts a flow diagram of a method 300 for validating a new or upgraded ALG file 200 (or firewall rule set) in accordance with the principles of the present invention. Method 300 may be utilized when a new or upgraded ALG file 200 is stored in memory of the cable modem 130 for execution by the firewall 150 therein. Method 300 comprises checking various parameters for compatibility issues and loss of data during file transfer. It is noted that the types of parameters and the specific order shown in FIG. 3 for validating the various parameters are merely illustrative, and should not be construed as being so limiting.

In particular, method 300 starts at step 302, and proceeds to step 304, where an ALG file 200 is sent to the cable modem 130 and buffered in the volatile memory 136. In one embodiment, the firewall 150 periodically polls a central location (i.e., the ALG database 120) at the service provider 110 for new or upgraded ALG files 200. The new or upgraded ALG files 200 are then downloaded from the TCP/IP file server 116 at the head end 112 via the access network, as required.

In a second embodiment, a configuration file is downloaded to the cable modem 130 from the service provider 110. The configuration file provides bi-directional network policy information used to establish a managed connection. The cable modem application (e.g., firewall 150) checks the configuration file and determines whether to download the ALG file 200. If the firewall 150 executing this discrimination algorithm determines the ALG file 200 is appropriate for the cable modem 130, then the firewall 150 sends a request to the file server 116 to send the ALG file 200. The file server 116 then downloads the ALG file to the cable modem 130 via the access network 108.

In a third embodiment, the ALG files 200 may be loaded into the cable modem 130 by a user on their user device 172. In this instance, the ALG file 200 is stored on a non-volatile medium, such as a floppy disk, CD-ROM, disk drive, and the like. As such, step 304 of method 300 encompasses any the three embodiments described above. The method 300 then proceeds to step 306.

At step 306, the header format version field 216 in the header 210 of the received ALG file 200 is checked. If at step 308, the header format version is not known, then the method 300 proceeds to step 350, where the ALG file 200 is rejected. That is, the ALG file 200 is not stored in the non-volatile memory 138 and/or 140 or used by the firewall 150, and at step 399, the method 300 ends. If, at step 308, the header format version is known; then the method 300 proceeds to step 310.

At step 310, the ALG header size field 216 and ALG body size field 224 in the header 210 of the received ALG file 200 are checked. If at step 312, the ALG file 200 exceeds the capacity of the non-volatile memory 136, then method 300 proceeds to step 350, where the ALG file 200 is rejected as discussed above. If at step 312, the ALG file 200 does not exceed the capacity of the non-volatile memory 136, then method 300 proceeds to step 314.

At step 314, the expected header CRC field 220 in the header 210 of the received ALG file 200 is checked. At step 316, the CRC for the header 210 is calculated such that the cable modem 130 applies the same polynomial to the data (header 210) and compares the result with the CRC result appended by the service provider 110. If, at step 318, the calculated CRC and the appended header CRC do not match, then method 300 proceeds to step 350, where the ALG file 200 is rejected as discussed above. If, at step 318, the calculated CRC and the appended header CRC match, then method 300 proceeds to step 320.

At step 320, the expected body CRC field 226 in the header 210 of the received ALG file 200 is checked. At step 316, the CRC for the ALG body 202 is calculated such that the cable modem 130 applies the same polynomial to the data (ALG body 202) and compares the result with the CRC result appended by the service provider 110. If, at step 324, the calculated CRC and the appended body CRC do not match, then method 300 proceeds to step 350, where the ALG file 200 is rejected as discussed above. If, at step 324, the calculated CRC and the appended body CRC match, then method 300 proceeds to step 326.

At step 326, the ALG authentication signature field 222 in the header 210 of the received ALG file 200 is checked. At step 328, an authentication operation is performed on the signature. For example, authentication may be provided by Rivest Shamir Adelman (RSA) signature algorithm with Secure Hash Algorithm-1 ( SHA-1 ), or other conventional authenticating techniques as is known in the art. If at step 330, the ALG file 200 is not from an authenticated source, then method 300 proceeds to step 350, where the ALG file 200 is rejected as discussed above. If at step 330, the ALG file 200 is from an authenticated source, then method 300 proceeds to step 332.

At step 332, the hardware version family field 228 in the header 210 of the received ALG file 200 is checked. If at step 334, the ALG file 200 is not compatible with the hardware version of the cable modem 130, then method 300 proceeds to step 350, where the ALG file 200 is rejected as discussed above. If at step 334, the ALG file 200 is compatible with the hardware version of the cable modem 130, then method 300 proceeds to step 336.

At step 336, the software version family field 230 in the header 210 of the received ALG file 200 is checked. If at step 338, the ALG file 200 is not compatible with the software version of the cable modem 130, then method 300 proceeds to step 350, where the ALG file 200 is rejected as discussed above. If at step 338, the ALG file 200 is compatible with the software version of the cable modem 130, then method 300 proceeds to step 340.

Once the ALG file 200 has been checked for compatibility issues and corrupted data, at step 340, the ALG file 200 is loaded into the non-volatile memory 136 of the cable modem 130, and at step 399, the method 300 ends. Method 300 provides a routine to validate the compatibility of an ALG file 200 or firewall rule set while receiving the ALG file 200 or rule set, and prior to using such received file or rule set. If the validation algorithm indicates the ALG file or firewall rule set is not compatible with the hardware or software of the cable modem 130, then the received file or rule set may be safely rejected. As such, the risk of inducing a non-recoverable error condition by implementing a non-compatible ALG file 200 or rule set is substantially reduced.

Although various embodiments that incorporate the teachings of the present invention have been shown and described in detail herein, those skilled in the art may readily devise many other varied embodiments that still incorporate these teachings.

## Claims

1. A method, comprising:
receiving (304), at a bi-directional communications device (130), an application level gateway (ALG) file (200);
comparing (308, 310, 314, 320, 326, 332, 336) at least one compatibility parameter of said ALG file with at least one hardware feature of said bi-directional communications device; and
storing (340) said ALG file at said bi-directional communications device in response to a favorable comparison of said at least one compatibility parameter;
wherein the receiving, comparing and storing steps are performed in the specified order.

2. The method of claim 1, further comprising:
rejecting (350) said ALG file at said bi-directional communications device in response to an unfavorable comparison of said at least one compatibility parameter.

3. The method of claim 1, wherein said at least one compatibility parameter comprises a file size (310) of said ALG file, and the at least one hardware feature of said bi-directional communications device comprises a capacity of a non-volatile memory in said bi-directional communications device to store the ALG file.

4. The method of claim 1, wherein said at least one compatibility parameter comprises at least one of a header size of said ALG file and a body size of said ALG file, and the at least one hardware feature of said bi-directional communications device comprises a capacity of a non-volatile memory in said bi-directional communications device to store the ALG file.

5. The method of claim 1, wherein said bi-directional communications device comprises a cable modem (130).

6. The method of claim 1, wherein said receiving step comprises:
periodically polling a service provider (110) to determine if at least one of a new and updated ALG file is available;
sending a request for an available ALG file; and
receiving said requested ALG file from an access network.

7. The method of claim 1, wherein said receiving step comprises:
receiving a configuration file from said service provider, said configuration file identifying at least one of new and updated ALG files;
sending a request for an available ALG files; and
receiving said requested ALG file from an access network.

8. The method of claim 1, wherein a firewall program (150) utilizes said ALG files to control data traffic.

9. The method of claim 1, wherein said ALG file (200) further comprises a header portion (24) comprising said at least one compatibility parameter as at least one of a header size (218) and a body size (224), and the at least one hardware feature of said bi-directional communications device comprises a capacity of a non-volatile memory in said bi-directional communications device to store the ALG file.

10. Apparatus, comprising:
means for receiving, at a bi-directional communications device (130), an application level gateway (ALG) file (200);
means for comparing at least one compatibility parameter of said ALG file with at least one hardware feature of said bi-directional communications device; and
means for storing (136, 140) said ALG file at said bi-directional communications device in response to a favorable comparison of said at least one compatibility parameter, wherein the functions performed by said receiving, comparing and storing means are performed in the specified order.

11. The apparatus of claim 10, further comprising:
means for rejecting said ALG file at said bi-directional communications device in response to an unfavorable comparison of said at least one compatibility parameter.

12. The apparatus of claim 10, wherein said bi-directional communications device comprises a cable modem (130).

13. The apparatus of claim 10, wherein said ALG file further comprises a header portion (214) comprising said at least one compatibility parameter as at least one of a header size (218) and a body size (224), and the at least one hardware feature of said bi-directional communications device comprises a capacity of a non-volatile memory in said bi-directional communications device to store the ALG file.

14. The method of claim 1 wherein said at least one compatibility parameter is contained within a header portion (210) of the ALG file (200).

## Patentansprüche

1. Verfahren, dass umfasst:
Empfangen (304) einer Anwendungsschicht-Gateway-Datei (ALG-Datei) (200) bei einer doppeltgerichteten Kommunikationsvorrichtung (130);
Vergleichen (308, 310, 314, 320, 326, 332, 336) mindestens eines Kompatibilitätsparameters der ALG-Datei mit mindestens einem Hardwaremerkmal der doppeltgerichteten Kommunikationsvorrichtung; und
Speichern (340) der ALG-Datei bei der doppeltgerichteten Kommunikationsvorrichtung in Reaktion auf einen positiven Vergleich des mindestens einen Kompatibilitätsparameters;
wobei der Empfangs-, der Vergleichs- und der Speicherschritt in der angegebenen Reichenfolge ausgeführt werden.

2. Verfahren nach Anspruch 1, das ferner umfasst:
Zurückweisen (350) der ALG-Datei bei der doppeltgerichteten Kommunikationsvorrichtung in Reaktion auf einen negativen Vergleich des mindestens einen Kompatibilitätsparameters.

3. Verfahren nach Anspruch 1, bei dem der mindestens eine Kompatibilitätsparameter eine Dateigröße (310) der ALG-Datei umfasst und bei dem das mindestens eine Hardwaremerkmal der doppeltgerichteten Kommunikationsvorrichtung eine Kapazität eines nicht flüchtigen Speichers in der doppeltgerichteten Kommunikationsvorrichtung zum Speichern der ALG-Datei umfasst.

4. Verfahren nach Anspruch 1, bei dem der mindestens eine Kompatibilitätsparameter eine Anfangsblockgröße der ALG-Datei und/oder eine Hauptteilgröße der ALG-Datei umfasst und bei dem das mindestens eine Hardwaremerkmal der doppeltgerichteten Kommunikationsvorrichtung eine Kapazität eines nicht flüchtigen Speichers in der doppeltgerichteten Kommunikationsvorrichtung zum Speichern der ALG-Datei umfasst.

5. Verfahren nach Anspruch 1, bei dem die doppeltgerichtete Kommunikationsvorrichtung ein Kabelmodem (130) umfasst.

6. Verfahren nach Anspruch 1, bei dem der Empfangsschritt umfasst:
periodisches Abfragen eines Diensteanbieters (110), um zu bestimmen, ob eine neue und/oder eine aktualisierte ALG-Datei verfügbar ist;
Senden einer Anforderung für eine verfügbare ALG-Datei; und
Empfangen der angeforderten ALG-Datei von einem Teilnehmernetz.

7. Verfahren nach Anspruch 1, bei dem der Empfangsschritt umfasst:
Empfangen einer Konfigurationsdatei von dem Diensteanbieter, wobei die Konfigurationsdatei neue und/oder aktualisierte ALG-Dateien identifiziert;
Senden einer Anforderung für eine verfügbare ALG-Datei; und
Empfangen der angeforderten ALG-Datei von einem Teilnehmernetz.

8. Verfahren nach Anspruch 1, bei dem ein Firewall-Programm (150) die ALG-Dateien zum Steuern des Datenverkehrs nutzt.

9. Verfahren nach Anspruch 1, bei dem die ALG-Datei (200) ferner einen Anfangsblockabschnitt (24) umfasst, der den mindestens einen Kompatibilitätsparameter als eine Anfangsblockgröße (218) und/oder als eine Hauptteilgröße (224) umfasst, und bei dem das mindestens eine Hardwaremerkmal der doppeltgerichteten Kommunikationsvorrichtung eine Kapazität eines nicht flüchtigen Speichers in der doppeltgerichteten Kommunikationsvorrichtung zum Speichern der ALG-Datei umfasst.

10. Vorrichtung, die umfasst:
Mittel zum Empfangen einer Anwendungsschicht-Gateway-Datei (ALG-Datei) (200) bei einer doppeltgerichteten Kommunikationsvorrichtung (130);
Mittel zum Vergleichen mindestens eines Kompatibilitätsparameters der ALG-Datei mit mindestens einem Hardwaremerkmal der doppeltgerichteten Kommunikationsvorrichtung; und
Mittel zum Speichern (136, 140) der ALG-Datei bei der doppeltgerichteten Kommunikationsvorrichtung in Reaktion auf einen positiven Vergleich des mindestens einen Kompatibilitätsparameters;
wobei die durch das Empfangs-, durch das Vergleichs-und durch das Speichermittel ausgeführten Funktionen in der angegebenen Reichenfolge ausgeführt werden.

11. Vorrichtung nach Anspruch 10, die ferner umfasst:
Mittel zum Zurückweisen der ALG-Datei bei der doppeltgerichteten Kommunikationsvorrichtung in Reaktion auf einen negativen Vergleich des mindestens einen Kompatibilitätsparameters.

12. Vorrichtung nach Anspruch 10, bei der die doppeltgerichtete Kommunikationsvorrichtung ein Kabelmodem (130) umfasst.

13. Vorrichtung nach Anspruch 10, bei der die ALG-Datei ferner einen Anfangsblockabschnitt (214) umfasst, der den mindestens einen Kompatibilitätsparameter als eine Anfangsblockgröße (218) und/oder als eine Hauptteilgröße (224) umfasst, und bei der das mindestens eine Hardwaremerkmal der doppeltgerichteten Kommunikationsvorrichtung eine Kapazität eines nicht flüchtigen Speichers in der doppeltgerichteten Kommunikationsvorrichtung zum Speichern der ALG-Datei umfasst.

14. Verfahren nach Anspruch 1, bei dem der mindestens eine Kompatibilitätsparameter in einem Anfangsblockabschnitt (210) der ALG-Datei (200) enthalten ist.

## Revendications

1. Procédé comprenant :
la réception (304), au niveau d'un dispositif de communication bidirectionnelle (130), d'un fichier de passerelle de niveau d'applicatif (ALG) (200) ;
la comparaison (308, 310, 314, 320, 326, 332, 336) d'au moins un paramètre de compatibilité dudit fichier ALG à au moins une fonction matérielle dudit dispositif de communication bidirectionnelle ; et
le stockage (340) dudit fichier ALG au niveau dudit dispositif de communication bidirectionnelle en réponse à une comparaison favorable dudit au moins un paramètre de compatibilité ;
où les étapes de réception, de comparaison et de stockage sont réalisées dans l'ordre spécifié.

2. Procédé selon la revendication 1, comprenant en outre :
le rejet (350) dudit fichier ALG au niveau dudit dispositif de communication bidirectionnelle en réponse à une comparaison non favorable dudit au moins un paramètre de compatibilité ;

3. Procédé selon la revendication 1, où ledit au moins un paramètre de compatibilité comprend une taille de fichier (310) dudit fichier ALG, et la au moins une fonction matérielle dudit dispositif de communication bidirectionnelle comprend une capacité d'une mémoire non volatile dudit dispositif de communication bidirectionnelle pour stocker le fichier ALG.

4. Procédé selon la revendication 1, où ledit au moins un paramètre de compatibilité comprend au moins une taille d'en-tête dudit fichier ALG ou une taille de corps dudit fichier ALG, et la moins une fonction matérielle dudit dispositif de communication bidirectionnelle comprend une capacité d'une mémoire non volatile dudit dispositif de communication bidirectionnelle pour stocker le fichier ALG.

5. Procédé selon la revendication 1, où ledit dispositif de communication bidirectionnelle comprend un modem câble (130).

6. Procédé selon la revendication 1, où ladite étape de réception comprend :
l'interrogation périodique d'un fournisseur de services (110) pour déterminer si au moins un fichier ALG nouveau ou mis à jour est disponible ;
l'envoi d'une demande pour un fichier ALG disponible ; et
la réception dudit fichier ALG demandé à partir d'un réseau d'accès.

7. Procédé selon la revendication 1, où ladite étape de réception comprend :
la réception d'un fichier de configuration dudit fournisseur de services, ledit fichier de configuration identifiant au moins un des fichiers ALG nouveaux ou mis à jour ;
l'envoi d'une demande pour un fichier ALG disponible ; et
la réception dudit fichier ALG demandé à partir d'un réseau d'accès.

8. Procédé selon la revendication 1, où un programme de pare-feu (150) utilise lesdits fichiers ALG pour commander un trafic de données.

9. Procédé selon la revendication 1, où ledit fichier ALG (200) comprend en outre une partie en-tête (24) comprenant ledit au moins un paramètre de compatibilité en tant qu'au moins une taille d'en-tête (218) ou une taille de corps (224), et la moins une fonction matérielle dudit dispositif de communication bidirectionnelle comprend une capacité d'une mémoire non volatile dudit dispositif de communication bidirectionnelle pour stocker le fichier ALG.

10. Appareil comprenant :
un moyen de réception, au niveau d'un dispositif de communication bidirectionnelle (130), d'un fichier de passerelle de niveau applicatif (ALG) (200) ;
un moyen de comparaison d'au moins un paramètre de compatibilité dudit fichier ALG à au moins une fonction matérielle dudit dispositif de communication bidirectionnelle ; et
un moyen de stockage (136, 140) dudit fichier ALG au niveau dudit dispositif de communication bidirectionnelle en réponse à une comparaison favorable dudit au moins un paramètre de compatibilité, où les fonctions réalisées par lesdits moyens de réception, de comparaison et de stockage sont réalisées dans l'ordre spécifié.

11. Appareil selon la revendication 10, comprenant en outre :
un moyen de rejet dudit fichier ALG au niveau dudit dispositif de communication bidirectionnelle en réponse à une comparaison non favorable dudit au moins un paramètre de compatibilité.

12. Appareil selon la revendication 10, où ledit dispositif de communication bidirectionnelle comprend un modem câble (130).

13. Appareil selon la revendication 10, où ledit fichier ALG comprend en outre une partie en-tête (214) comprenant ledit au moins un paramètre de compatibilité en tant qu'au moins une taille d'en-tête (218) ou une taille de corps (224), et la moins une fonction matérielle dudit dispositif de communication bidirectionnelle comprend une capacité d'une mémoire non volatile dans ledit dispositif de communication bidirectionnelle pour stocker le fichier ALG.

14. Procédé selon la revendication 1, où ledit au moins un paramètre de compatibilité est contenu dans une partie en-tête (210) du fichier ALG (200).
